# EUROPÄISCHE PATENTSCHRIFT

(11) **EP 2 850 386 B1**
(45) Veröffentlichungstag und Bekanntmachung des Hinweises auf die Patenterteilung: **25.07.2018**
(21) Anmeldenummer: 13725101.3
(22) Anmeldetag: 14.05.2013
(51) Int. Cl.: G01B 11/30

(54) **VERFAHREN UND VORRICHTUNG ZUR INSPEKTION VON OBERFLÄCHEN EINES UNTERSUCHTEN OBJEKTS**
METHOD AND APPARATUS FOR INSPECTING THE SURFACE OF AN OBJECT
MÉTHODE ET DISPOSITIF POUR L'INSPECTION DE SURFACE D'UN OBJET

(30) Priorität: 16.05.2012 DE 102012104282
(43) Veröffentlichungstag der Anmeldung: 25.03.2015
(73) Patentinhaber: ISRA Vision AG, 64297 Darmstadt (DE)
(72) Erfinder: LUXEN, Marc, 52070 Aachen (DE); ERXLEBEN, Jan, 52146 Würselen (DE)
(74) Vertreter: Keil & Schaafhausen Patent- und Rechtsanwälte PartGmbB
(86) Internationale Anmeldenummer: PCT/EP2013/059855
(87) Internationale Veröffentlichungsnummer: WO 2013/171176

(56) Entgegenhaltungen:
- DE-A1- 10 207 574
- BATLLE J ET AL: "Recent progress in coded structured light as a technique to solve the correspondence problem - image segmentation techniques", PATTERN RECOGNITION, ELSEVIER, GB, Bd. 31, Nr. 7, 31. Juli 1998 (1998-07-31), Seiten 963-982, XP004131001, ISSN: 0031-3203, DOI: 10.1016/S0031-3203(97)00074-5
- CHEN S Y ET AL: "Self-recalibration of a colour-encoded light system for automated three-dimensional measurements; Self-recalibration of a colour-encoded light system", MEASUREMENT SCIENCE AND TECHNOLOGY, IOP, BRISTOL, GB, Bd. 14, Nr. 1, 21. November 2002 (2002-11-21), Seiten 33-40, XP020063694, ISSN: 0957-0233, DOI: 10.1088/0957-0233/14/1/305
- MOLLEDA J ET AL: "Real-Time flatness inspection of rolled products based on optical laser triangulation and three-dimensional surface reconstruction", SPIE, PO BOX 10 BELLINGHAM WA 98227-0010, USA, Bd. 19, Nr. 3, 031206, 14. Juli 2010 (2010-07-14), Seiten 1-14, XP040541789,
- CAULIER Y ET AL: "An image content description technique for the inspection of specular objects", INTERNET CITATION, Bd. 2008, 195263, 31. Juli 2008 (2008-07-31), Seiten 1-14, XP002526050, ISSN: 1687-6172, DOI: 10.1155/2008/195263 Gefunden im Internet: URL:http://asp.eurasipjournals.com/content /2008/1/195263 [gefunden am 2008-07-31]

## Beschreibung

Die Erfindung betrifft ein Verfahren und eine Vorrichtung zur Inspektion von Oberflächen eines untersuchten Objekts gemäß dem Oberbegriff der Ansprüche 1 und 10, bei welchen die Oberfläche mittels mindestens einer Beleuchtungseinrichtung beleuchtet und mit mindestens einem Flächen-Bildsensor aufgenommen wird. Bei dem Flächen-Bildsensor kann es sich insbesondere um eine auch als eine Matrixkamera bezeichnete Flächenkamera handeln, bei der ein Bildausschnitt einem Pixel der Flächenkamera zugeordnet wird, wobei ein Pixel bei der Bildaufnahme einen für die aufgenommenen Bildausschnitt charakteristischen Wert annimmt. Die Werte können insbesondere Intensitätswerte sein, wobei das Bild sowohl monochromatisch (bspw. als Grauwertbild, Infrarotbild oder einfarbiges Bild) oder mehrfarbig (polychromatisch) aufgenommen werden kann. Die Farbe ist dabei definiert durch die Intensitätswerte der dem jeweiligen Pixel der Flächenkamera bzw. des Flächen-Bildsensors zugeordneten Farbsensoren, bspw. rot, grün, blau, infrarot und/oder dergleichen wellenlängenselektiven Farbsensoren. Erfindungsgemäß sollen der Flächen-Bildsensor bzw. die Flächenkamera vorzugsweise keine Zeilenkamera mit nur einer Bildzeile, d.h. mehreren nebeneinander in einer die Bildzeile bildenden Reihe liegenden Pixeln, sein.

Bei dem vorgeschlagenen Inspektionsverfahren werden die aufgenommenen Bilder einer Bildanalyseeinrichtung zugeführt, welche dazu eingerichtet ist, Oberflächenanomalien als Fehlerbereiche in einer Detektion insbesondere mittels Bildauswerteprogrammen zu ermitteln. Die Bildauswerteprogramme weisen dazu geeignete Algorithmen zur Bewertung einzelner Pixel oder Pixelbereiche, bspw. der Intensitätswerte der den einzelnen Pixel zugewiesenen Farbsensoren, auf. Die Farbsensoren können ein Sensor für ein monochromes Bild oder mehrere Sensoren für ein farbiges Bild sein. Ggf. werden in der Bildanalyseeinrichtung auch die Fehlerbereiche in einer Segmentierung insbesondere mittels Bildauswerteprogrammen zueinander oder gegen den Bildhintergrund abgegrenzt, zusammengehörige Fehlerbereiche in einer Regionenanalyse insbesondere mittels Bildauswerteprogrammen zusammengefasst und/oder aus Fehlerbereichen bzw. Fehlerregionen in einer Merkmalsextraktion insbesondere mittels Bildauswerteprogrammen charakteristische Fehlermerkmale abgeleitet, die für eine sich anschließende Fehlerklassifizierung verwendet werden oder verwendet werden können.

Bei der Erfindung ist der Flächen-Bildsensor dreidimensional auf ein ausgewähltes Koordinatensystem kalibriert. Dreidimensional kalibriert bedeutet, dass die Anordnung, d.h. die Position und die Orientierung, des Flächen-Bildsensors sowie dessen Abbildungseigenschaften, bspw. in einem Kameramodell, bekannt sind, so dass unter Ausnutzung geeigneter, in dem ausgewählten Koordinatensystem und/oder einem anderen Koordinatensystem bekannter Merkmale, die in dem aufgenommenen Bild abgebildet sind, eine Positionsbestimmung dieser Merkmale und/oder des aufgenommenen, zu untersuchenden bzw. untersuchten Objekts erfolgen kann. Bspw. können solche Merkmale charakteristische Merkmale des Objekts sein, die in einem Objektkoordinatensystem bekannt sind. Derartige Bildauswerteverfahren sind allgemein bekannt und müssen vorliegend nicht genauer beschrieben werden.

Bei der Durchführung des erfindungsgemäß vorgeschlagenen Verfahrens wird das zu untersuchende bzw. untersuchte Objekt mit seiner Oberfläche relativ zu dem Flächen-Bildsensor bewegt, insbesondere an einem vorzugsweise in dem ausgewählten Koordinatensystem feststehenden Flächen-Bildsensor vorbeibewegt. Das ausgewählte Koordinatensystem kann bspw. das Welt-Koordinatensystem der Umgebung sein.

Die Erfindung betrifft somit Anlagen für eine hochauflösende, flächendeckende und berührungslose Erfassung der Formeigenschaften und der Reflexionseigenschaften von Objekten in Verbindung mit Methoden zur Datenfusion und Datenanalyse für die Inspektion von mittelflächigen oder großflächigen Oberflächen in der werkstoffherstellenden oder werkstoffverarbeitenden Industrie. Derartige Anlagen ermöglichen die Erfassung von Reflexionseigenschaften der Oberflächen in Echtzeit und lassen sich als Oberflächeninspektionssysteme zur Oberflächenqualitätskontrolle und sowie zur Prozessanalyse und Prozesskontrolle einsetzen.

Die bekannten Anlagen zur berührungslosen Inspektion von mittelflächigen oder großflächigen Oberflächen beschränken sich auf die sensorische Erfassung der Reflexionseigenschaften der Oberfläche und bedienen sich dazu der zweidimensionalen Abtastung der Oberfläche durch einen Bildsensor, bspw. ein CCD-Element mit einer Abbildungsoptik, welche den aufzunehmenden Bildbereich auf das CCD-Element abbildet. Diese Bildsensoren werden auch als Kamera bezeichnet.

Die Messung der Reflexionseigenschaften erfolgt dabei anhand eines zweidimensionalen Abbildes der Oberfläche, das durch Schwarzweiß- oder Farbkameras unter monochromatischer oder polychromatischer (farbiger) Beleuchtung und ggf. unter Einsatz geeigneter optischer Filter erfasst wird. Dabei kommen Flächen- oder Zeilenkameras in Verbindung mit entsprechenden Beleuchtungseinrichtungen zum Einsatz. Die Beleuchtungs- und Betrachtungswinkel sowie die eingesetzten Beleuchtungswellenlängen (monochromatisch oder polychromatisch) werden an die jeweilige Inspektionsaufgabe adaptiert. Der verwendete Bildsensor liefert für die Inspektion einen kontinuierlichen Datenstrom von ein- oder mehrkanaligen Bildern, wobei die Bildinformationen (insbesondere Intensitätswerte für eine oder verschiedene Wellenlängen) jeweils ein- oder mehrkanalig für jedes Pixel oder jeden Pixelbereich der Flächenkamera zur Verfügung stehen.

Zum Auffinden, Bewerten und Kategorisieren von Oberflächenfehlern wird das aufgenommene Bild (Grauwertbild oder Farbbild) einer automatischen Bildanalyse unterzogen, bei der spezielle Bildanalysealgorithmen zunächst Oberflächenanomalien aufdecken (Detektion), die Fehlerbereiche zueinander und zum Hintergrund abgrenzen (Segmentierung) und ggf. zusammengehörige Fehlerbereiche zusammenfassen (Regionenanalyse). Für eine Kategorisierung und Bewertung der so erkannten Oberflächenanomalien in anwendungs- und oberflächenspezifische Fehlerklassen werden innerhalb der Fehlerregionen aus der Bildfunktion charakteristische Bildmerkmale abgeleitet (Merkmalsextraktion). Ein Klassifikationsverfahren ordnet anschließend jeder gefundenen Auffälligkeit eine Fehlerkategorie und - abhängig von der jeweiligen Anwendung - einen Schweregrad zu. Auffälligkeiten, die nicht als Oberflächenfehler bewertet werden, werden als sog. "Pseudofehler" klassifiziert.

Der Informationsgehalt eines zweidimensionalen Abbildes der zu untersuchenden Oberfläche, wie es von den bekannten Anlagen zur Oberflächeninspektion erhoben wird, ist jedoch begrenzt. Bestimmte Oberflächeneigenschaften sind einer Messung der Reflexionseigenschaften schlichtweg nicht zugänglich. Auch Intensitäts- bzw. Farbinformationen liefern zuweilen selbst bei optimalem Sensoraufbau und optimaler Datenauswertung nicht genügend Evidenz für eine zuverlässige Trennung zwischen fehlerbehafteten und nicht fehlerbehafteten Oberflächenstrukturen. So werden bspw. bei extrem stark strukturierten Oberflächen, wie Brammenoberflächen, unabhängig von dem konkreten Detektionsverfahren häufig eine sehr hohe Anzahl an Pseudofehlern beobachtet, da sich die im Allgemeinen unkritischen Materialstrukturen im Farb- oder Intensitätsbild als massenhaft auftretende Auffälligkeiten zeigen, die als Oberflächenanomalien und damit als Fehlerbereiche detektiert werden.

Bei den bekannten Inspektionsverfahren zeigen sich somit auf der gesamten Materialoberfläche Auffälligkeiten, bei denen es sich tatsächlich nicht um Oberflächenfehler, sondern um übliche Materialstrukturen handelt. Andererseits lassen sich anhand des Intensitäts- bzw. Farbbildes relevante Oberflächenanomalien, wie etwa Risse oder Vertiefungen, von diesen Pseudofehlern in der Regel nur schwer unterscheiden. Somit ist des dem nachgeschalteten Klassifizierungsverfahren nur mit einer signifikanten Unsicherheit möglich, die tatsächlichen Fehler von den Pseudofehlern zu unterscheiden, woraus je nach Inspektionsaufgabe ein nicht unerheblicher Anteil von Fehlalarmen resultiert, der zu einer erheblichen manuellen Nacharbeit führt.

In der DE 102 07 574 A1 wird ein Bearbeitungstisch für flächige, biegeschlaffe Körper wie insbesondere Tierhäute beschrieben, der einen Projektor zum Projizieren einer Lichtstruktur und eine Bildaufnahmeeinrichtung zur bildlichen Aufnahme der auf den Körper projizierten Lichtstruktur aufweist. Ferner ist ein Rechenwerk vorgesehen, das aus der bildlichen Aufnahme die Art und/oder den Fehlergrad des ermittelten Fehlers errechnet. Durch die Aufnahme der Lichtstruktur kann das Rechenwerk ein Tiefenprofil oder maximale Tiefe der Fehlerstelle erkennen und das ungefähre Profil der Fehlerstelle ermitteln.

Die Veröffentlichung Batlle et. al., Recent progress in coded structured light as a technique to solve the correspondence problem, Pattern Recogniction, Vol. 31, No. 7, pp 963-982, 1998 (XP4131001A) beschreibt die Anwendung codierter Lichtstrukturen zum Erhalten dreidimensionaler Oberflächenstrukturen, bei dem das projizierte Lichtmuster eine Kodierung enthält, damit ein Punkt des bekannten Lichtmusters in der Projektion eindeutig zugeordnet werden kann. Dafür wird auch die Notwendigkeit beschrieben, das gesamte System dreidimensional zu kalibrieren, um die Tiefenstruktur der Oberfläche zu vermessen.

Aufgabe der vorliegenden Erfindung ist es daher, die Verlässlichkeit der Fehlererkennung bei der Inspektion von Oberflächen zu verbessern und insbesondere bei stark strukturierten Oberflächen die Anzahl detektierter Pseudofehler zu verringern.

Diese Aufgabe wird erfindungsgemäß durch ein Verfahren mit den Merkmalen des Anspruchs 1 und eine Vorrichtung mit den Merkmalen des Anspruchs 10 gelöst. Dabei ist erfindungsgemäß insbesondere vorgesehen, dass mittels einer dreidimensional auf das ausgewählte Koordinatensystem kalibrierten Projektionseinrichtung ein Muster auf einen Bereich der Oberfläche des Bildes projiziert wird, welcher durch den Flächen-Bildsensor aufgenommen wird, und dass jeweils die Position definierter Musterabschnitte des projizierten Musters auf der Oberfläche des Objekts in dem ausgewählten Koordinatensystem bestimmt sowie ggf. in ein anderes Koordinatensystem, bspw. das ObjektKoordinatensystem, umgerechnet wird.

Durch die Projektion des Musters auf den Bereich der Oberfläche ist es möglich, die Struktur der Oberfläche in einer gewünschten Auflösung, welche durch die Auflösung des Bildflächen-Sensors begrenzt ist, als Tiefeninformation zu erfassen und gleichzeitig mit den erfassten Farb- bzw. Intensitätsinformationen in jedem Bildpunkt für die Detektion und Klassifizierung von Fehlerbereichen heranzuziehen. Dadurch wird erfindungsgemäß eine signifikante Verbesserung der Detektionsleistung erreicht, weil durch die durchgängig simultane Erfassung, Fusion und Analyse der hochauflösenden zweidimensionalen Intensitäts- und Farbbilder mit den Strukturbildern zusätzliche Informationen (Tiefeninformationen) für die Bewertung der Anomalien zur Verfügung stehen. Die Strukturinformationen können erfindungsgemäß mit geringerer, gleicher oder höherer Auflösung als die Intensitäts- bzw. Farbinformationen erzeugt werden.

Unter einer dreidimensional kalibrierten Projektionseinrichtung versteht die vorliegende Erfindung, dass die durch die Projektion des Musters im Raum gebildete Ebenenform bekannt ist, die je nach Art des Musters eine gerade (plane) oder gekrümmte Ebene bilden kann. Im Falle einer projizierten Linie als Muster ist die Ebenenform also eine plane Ebene. Bei anderen Mustern können gekrümmte Ebenen bzw. Ebenenformen aus mehreren definiert zueinander angeordneten Ebenen entstehen, bspw. bei einem projizierten Kreuzmuster oder mehreren beabstandeten Linien (Streifenmuster).

Die definierten Musterabschnitte sind Teilabschnitte des gesamten projizierten Musters, wobei die Größe der Musterabschnitte, deren Position bestimmt wird, entsprechend der gewünschten Auflösung gewählt werden kann, mit der der durch das auf die Oberfläche projizierte Muster bestimmbare Oberflächenverlauf der Oberfläche des Objekts bekannt sein soll. Grenze und Maß für die Auflösung ist die Pixelgröße des Flächen-Bildsensors, wobei ein Musterabschnitt in seiner Längs- und/oder Querausdehnung gerade einem Pixel oder mehreren zusammengefassten Pixeln des Flächen-Bildsensors entsprechen kann.

Die Bewegung der Oberfläche vorbei an dem Flächen-Bildsensor wird erfindungsgemäß vorzugsweise mittels einer auf das ausgewählte Koordinatensystem kalibrierten Transporteinrichtung erreicht, die eine definierte Verschiebung der Oberfläche relativ zu dem Flächen-Bildsensor und dem projizierten Muster erlaubt. Maßstab für die Geschwindigkeit der Verschiebung in Abstimmung mit der Bildaufnahmegeschwindigkeit ist die gewünschte Auflösung.

Eine bevorzugte Anwendung der Erfindung erfolgt in der Reflexionsanordnung, in welcher der Flächen-Bildsensor das auf der Oberfläche reflektierte Licht der Beleuchtungseinrichtung erfasst.

Gemäß einer bevorzugten Ausführungsform der Erfindung wird aus den ermittelten bzw. bestimmten Positionen der Musterabschnitte ein Tiefenprofil der Oberfläche ermittelt. Die einzelnen Positionen der Musterabschnitte auf der Oberfläche werden dabei jeweils mittels einer an sich bekannten Triangulationsauswertung bestimmt, die darauf beruht, dass die Projektionseinrichtung und die Kamera dreidimensional auf das ausgewählte Koordinatensystem kalibriert sind.

Die Verbesserung der Gesamtleistung des erfindungsgemäßen Oberflächeninspektionssystems wird also durch die Ergänzung der erfassten reflexiven Oberflächendaten um die Tiefeninformation erreicht, wobei dies auf der simultanen Erfassung und Analyse von zweidimensionalen Bildern, welche die Reflexionseigenschaften der Oberfläche repräsentieren, und dreidimensionalen Bildern, welche die dreidimensionale Geometrie der Oberfläche als Tiefenkarten (Oberflächentopographie) repräsentieren, beruht. Durch die Nutzung der zusätzlichen Tiefeninformation, die als Tiefenprofil der Oberfläche im Sinne einer Oberflächentopographie für die gesamte Oberfläche zur Verfügung steht, werden die Detektionssicherheit, die Genauigkeit der Fehlerpositionierung und die Klassifizierung verbessert und die Fehlerbeschreibung um eine Information der Fehlertopographie ergänzt.

Auf stark strukturierten Oberflächen kann hierdurch insbesondere die Rate von Fehlalarmen minimiert werden, da bestimmte Muster in dem die Reflexionseigenschaften der Oberfläche auswertenden zweidimensionalen Bild durch Tiefeninformationen erklärbar sind, die eine normale Struktur der Oberfläche wiederspiegeln. Außerdem kann durch eine dreidimensionale Visualisierung sowohl von Oberflächenfehlern als auch von ganzen Oberflächen die Darstellung von Auffälligkeiten verbessert werden.

Gemäß einer bevorzugten Ausführungsform des vorbeschriebenen Verfahrens kann als Muster ein Linienmuster (bestehend aus genau einer Linie) oder ein Streifenmuster (bestehend aus mindestens zwei Linien) projiziert werden, wobei sowohl das Linienmuster als auch das Streifenmuster durch eine als Streifenprojektor ausgebildete Projektionseinrichtung erzeugt werden kann.

Erfindungsgemäß wird die Oberflächentopographie also bevorzugt nach einem Lichtschnittverfahren unter Nutzung einer solchen Streifenprojektion erfasst. Während sich die zu inspizierende Oberfläche unter dem Sensor hinwegbewegt, bildet die Projektionseinrichtung ein aus einer oder mehreren Linien bestehendes Muster auf die Oberfläche ab. Das Muster wird in die lichtempfindliche Fläche einer Matrixkamera (d.h. die Pixel des Flächen-Bildsensors) abgebildet, und die entstehende Bildinformation wird zur Ableitung von linearen Tiefenprofilen der Oberfläche genutzt. Die Erfassung der Tiefeninformation erfolgt somit profilweise.

Ein flächenhaftes, dreidimensionales Modell der Oberfläche entsteht durch die sukzessive Aufnahme und Aneinanderreihung von einzelnen Zeilenprofilen. Die Zeilenaufnahmegeschwindigkeit ist dabei vorzugsweise so auf die Vorschubgeschwindigkeit der Oberfläche relativ zu dem Flächen-Bildsensor abgestimmt, dass die Tiefenmessung mit einer konstanten lateralen Auflösung erreicht wird.

Eventuell durch Abschattungen auftretende Lücken sind so entweder klein oder könnten ggf. durch weitere Flächen-Bildsensoren (Kameras) vermieden werden.

Die Linien können vorzugsweise als gerade Linien ausgebildet sein, weil dann die Auswertung besonders einfach ist. Die Linienbreite entspricht der gewünschten Auflösung und die Bewegung der Oberfläche relativ zu der projizierten Linie erfolgt vorzugsweise quer zu der Linienrichtung. Vorzugsweise ist die Linienbreite größer als die Auflösung der Bilder in der Flächenkamera bzw. in Bewegungsrichtung, damit auch die Muster flächige Bereiche ergeben, in denen Oberflächenfehler auswertbar sind.

Der besondere Vorteil der vorliegenden Erfindung besteht somit in der für die mittelflächigen und/oder großflächigen Oberflächen angepassten Auswahl einer Kombination aus Projektionseinrichtung und Flächen-Bildsensor, bei der beide Beleuchtungseinrichtungen, d.h. die Beleuchtungseinrichtung für die Erfassung der Reflexionseigenschaften der Oberfläche und die Beleuchtungseinrichtung für die Projektion des Musters (Projektionseinrichtung) zur Erfassung der Tiefeninformationen, ggf. sogar identisch sind und bei der sowohl die Tiefeninformation als auch die Information über Reflexionseigenschaften der Oberfläche mit ein und demselben Flächenbildsensor und vorzugsweise aus ein und demselben Bild mit hinreichender Geschwindigkeit ermittelt werden können.

Je nachdem, welche Beleuchtung zur Erzeugung des Lichtschnitts benutzt wird, wird das Bild zur Erfassung der Reflexionseigenschaften aus den jeweils beleuchteten Teilen zusammengesetzt. Dabei kann auch über mehrere Pixel integriert werden, um Störungen zu unterdrücken. Als Resultat entsteht ein N+1-kanaliges Bild, bei dem N-Kanäle die Informationen über Reflexionseigenschaften der Oberfläche enthalten und bei dem der N+1-te Kanal die Tiefeninformation enthält und so das Tiefenbild bildet. Es besteht somit eine exakte örtliche Übereinstimmung zwischen dem Farbbild und dem Tiefenbild, d.h. jedem Bildabschnitt des Farbbildes (bspw. einem Pixel), der die Information über die Reflexionseigenschaften der Oberfläche enthält, ist somit bereits im Sensor direkt die zugehörige Tiefeninformation zugeordnet.

Die Tiefeninformation kann erfindungsgemäß nun gemeinsam mit der Information über die Reflexionseigenschaften verwendet werden, um Fehler auf der Materialoberfläche zu erkennen, die sich nur aufgrund ihrer Topographie bzw. Topologie auszeichnen, bspw. Risse oder Eindrücke. Damit ist eine sichere Detektion und Klassifizierung von topographischen Fehlern möglich. Insbesondere für die Klassifizierung steht damit erfindungsgemäß deutlich mehr Information zur Verfügung als bei herkömmlichen Inspektionssystemen, um eine klare Trennung zwischen Oberflächenfehlern und Pseudofehlern oder zwischen Flecken und topographischen Fehlern zu erreichen und die Oberflächenfehler nach Schweregraden zu klassifizieren.

Erfindungsgemäß kann das Muster als heller Bereich, vorzugsweise als Linie, mit dunklen Zwischenräumen projiziert werden. In diesem Fall können die Bestimmung der Position des Musterabschnitts aus dem dreidimensionales Bild und die Detektion von Fehlerbereichen in dem zweidimensionalen Bild der Oberfläche besonders einfach zusammenfallen, also in dem identischen Bildbereich erfolgen. Es ist natürlich ebenso grundsätzlich auch möglich, dass die Bildbereiche getrennt sind, indem in einem von dem Muster verschiedenen Bereich des Projektionsmusters ein Fenster zur Beleuchtung der Oberfläche freigelassen wird. Dies ist besonders einfach durch eine Streifenprojektion erreichbar, bei der bis auf die Streifen das Licht ausgeblendet wird. Gegebenenfalls findet in einem separierten zweidimensionalen Bildbereich auch keine Ausblendung des Lichtes statt, um einen Bildbereich zur Detektion von Fehlerbereichen, vorzugsweise in Richtung quer zur Längsrichtung des projizierten Musters versetzt, zu ermöglichen.

In einer alternativen Ausgestaltung ist es erfindungsgemäß möglich, dass das Muster als dunkler Bereich, vorzugsweise als Linie, mit hellen Zwischenräumen projiziert wird. In diesem Fall erfolgt die Bestimmung der Position des Musterabschnitts und des zweidimensionalen Bilds der Oberfläche zur Detektion von Fehlerbereichen getrennt, ggf. aber unmittelbar aneinander angrenzend bzw. bei einer Hell-Dunkelfeld-Oberflächeninspektion auch überlappend, indem der dunkle Bereich als Dunkelfeld mitbenutzt wird. In diesem Fall ist das Projektionsmuster transparent mit abgedunkeltem Musterbereich für die Projektion ausgebildet, wobei auch der dunkle Bereich einen Teil der Beleuchtung durchlassen kann, so dass auch dieser dunkle Bereich nicht am Rand des im Bild erreichten Kontrastes liegt und eine gewisse Zeichnung aufweist. Dies kann dann zur Detektion von Oberflächenfehlern in einer Reflexionsanordnung verwendet werden.

Ferner kann das Muster durch eine Laser-Linienprojektion erzeugt werden, wobei der Laser-Projektor bei ausreichend schneller Bewegung des Laserlichts auch für die zweidimensionale Beleuchtung insgesamt verwendet werden kann. Auch kann ggf. mittels eines Strahlenteilers und geeigneter Optik der Laserstrahl zur Beleuchtung aufgeweitet werden, um neben der Linienprojektion auch eine flächige Beleuchtung zu erzeugen.

In allen vorgenannten Varianten kann die Beleuchtungseinrichtung auch eine Hell-Dunkelfeld-Beleuchtung erzeugen.

Erfindungsgemäß weisen das projizierte Muster und die beleuchtete Oberfläche in dem aufgenommenen Bild insbesondere im Bereich um das projizierte Muster herum unterschiedliche Helligkeiten auf, wobei das projizierte Muster und/oder die beleuchtete Oberfläche nicht am Rand des durch den Flächen-Bildsensor auflösbaren Kontrastes liegen. Dadurch können beide Bereiche des aufgenommenen Bildes, d.h. sowohl der Bereich des projizierten Musters als auch der (nur) normal beleuchtete Bereich, gleichzeitig auf reflektiv erkennbare Oberflächenfehler ausgewertet werden. Vorzugsweise können die Muster, auch wenn als Linie ausgebildet, flächig gestaltet sein, d.h. die Ausdehnung des Musters in Richtung seiner kürzesten Ausdehnung deckt mehrere Pixel des Flächenbildsensors und/oder des Bildes in Bewegungsrichtung ab. Damit ist auch die projizierte Linie ein flächiger Bereich. Die Auswertung der Geometrie (zur Bestimmung der Tiefeninformation) kann erfindungsgemäß bevorzugt entlang des Kontrastübergangs von Muster und beleuchteter Oberfläche erfolgen, der in dem aufgenommenen Bild gut erkennbar ist. Vorzugsweise sind die Muster heller als Rest der beleuchteten Oberfläche. Die Projektion des hellen Musters lässt sich besondere einfach durch eine separate Projektionseinrichtung erreichen, die auch relativ zu der Oberflächenbeleuchtungseinrichtung bewegbar ist. Es ist grundsätzlich, bspw. durch entsprechende Filter, auch eine kombinierte Projektions- und Beleuchtungseinrichtung möglich.

Gemäß dem erfindungsgemäß vorgeschlagenen Verfahren ist vorgesehen, dass die Aufnahme des projizierten Musters und die Aufnahme der beleuchteten Oberfläche, d.h. des Bereichs der Oberfläche des Objekts, der durch die Beleuchtungseinrichtung beleuchtet ist, in demselben Bild des Flächen-Bildsensors erfolgt. Dadurch erfolgt die Auswertung des Tiefenprofils und die Detektion von Oberflächenfehlern in demselben Bild, so dass kein Aufwand für die Ermittlung geometrischer Beziehungen zwischen dem zweidimensionalen Bild für die Detektion von Oberflächenfehlern und dem dreidimensionalen Bild für die Positionsbestimmung des Musterprofils, d.h. die Bestimmung des Tiefenprofils der Oberfläche notwendig wird. Das Herstellen dieser geometrischen Beziehung wird auch als Bildregistrierung bezeichnet, für die insgesamt weniger Rechenaufwand anfällt und eine höhere Genauigkeit erreicht wird, da die Fehler geometrischer Beziehungen für die Zuordnung der Reflexionsinformationen zu den Tiefeninformationen entfallen. Die Integration des Intensitäts- und des Tiefensensors in derselben Beleuchtungs- und Kameraeinheit erlaubt also einen kosten- und platzsparenden Sensoraufbau und eröffnet vielerorts, insbesondere in beengten Montagelinien, erst die Möglichkeit zur Integration eines Tiefensensors in den Herstellungsprozess des zu inspizierenden Objekts.

Erfindungsgemäß kann ferner vorgesehen sein, dass die Bildaufnahme und die Bewegung des Objekts derart aufeinander abgestimmt sind, dass zwischen zwei aufeinanderfolgenden Aufnahmen ein Objektvorschub um genau eine Bildzeile des Flächen-Bildsensors erfolgt, vorzugsweise zumindest in dem Bereich des projizierten Musters bzw. des zur Positionsbestimmung herangezogenen Teils des Musters, bspw. einer ausgezeichneten Linie bei einer Streifenprojektion aus mehreren Linien oder einem anderen ausgezeichneten Bildbereich. Auf diese Weise werden ein vollständiges Tiefenprofil der gesamten Oberfläche und eine einfache Indizierung der Oberfläche zur Lokalisierung der verschiedenen Oberflächenbereiche erreicht. Eine Bildzeile kann dabei vorzugsweise die Höhe eines Pixels oder mehrerer benachbarter Pixel aufweisen, je nach der gewünschten Auflösung.

Der Aufwand für eine Bildregistrierung, d.h. für die Ermittlung der geometrischen Beziehungen zwischen dem zweidimensionalen Bild zur Auswertung der Reflexionseigenschaften und dem dreidimensionalen Bild für die Erstellung des Tiefenprofils, entfällt, da die Farb- und die Tiefeninformationen bereits in den Flächen-Bildsensor einander pixelgenau zugeordnet sind, wobei pixelgenau ein Pixel oder einen Bereich zusammengefasster Pixel bedeutet. Damit entfällt der Bildregistrierschnitt auch als mögliche Fehlerquelle in der Datenanalyse. Insbesondere für ein derartig ausgestaltetes Verfahren ist es sinnvoll, einem ausgewählten Oberflächenbereich eine mehrkanalige Bildinformation zuzuordnen, von der ein Kanal die ortsabhängige Tiefeninformation und ein weiterer Kanal oder mehrere weitere Kanäle die ortsabhängige Farbinformation enthalten. Somit steht bereits in dem Flächen-Bildsensor ein N+1-kanaliges Bild zur Verfügung, bei dem der erste Kanal die Tiefeninformation T(r,c) am Punkt (r,c) und die übrigen Kanäle K an dem Bildpunkt (r,c) die Information über die ortsabhängigen Reflexionseigenschaften R_{K} (r,c) der Oberfläche enthalten.
Die Farbinformation kann in diesem Sinne die Gesamtintensität (bspw. eines monochromen oder eines Grauwertbildes) und/oder die einzelnen Farben zugeordnete Intensität (Farbbild) sein, wobei unter Farbe eine wellenlängenselektive Auswahl aus dem gesamtem Wellenlängenspektrum verstanden wird, was bspw. zusätzlich zu den üblichen Farben Rot, Grün, Blau auch Infrarot umfassen kann. Bei der Verwendung einer RGB-Farbkamera (rot, gelb, blau) wird das resultierende Bild bspw. die vier Kanäle T, R, G und B (Tiefe, Rot, Grün und Blau) besitzen. Der erste Kanal repräsentiert also die erfindungsgemäß bestimmte Tiefeninformation und die weiteren Kanäle jeweils den Rot-, Grün- und Blauanteil des Spektrums des Farbbildes. Bei Hinzunahme eines Infrarotkanals I ergibt sich somit ein fünf-kanaliges Bild mit den Kanälen T(Tiefe), T(rot), G(grün), B(blau) und I(infrarot).
Der ausgewählte Oberflächenbereich kann erfindungsgemäß zumindest in einem ausgezeichneten Bildbereich gerade einem Pixel des Flächen-Bildsensors oder einer Zusammenfassung mehrerer Pixel des Flächen-Bildsensors entsprechen. Wie zuvor beschrieben ist es besonders vorteilhaft, wenn die mehrkanalige Bildinformation bereits im Flächen-Bildsensor den einzelnen Bildbereichen zugeordnet wird, bspw. durch einen in dem Bild-Flächensensor vorgesehenen Mikroprozessor zur Steuerung des Flächen-Bildsensors. Hierdurch ergeben sich Synergien bei der Auswertung und die Echtzeitfähigkeit des vorbeschriebenen Verfahrens sowie der zur Durchführung dieses Verfahrens eingerichteten Vorrichtung.
Weil damit das Registrierungsproblem bereits durch die Integration des Farb- und des Tiefensensors in dieselbe Beleuchtungs- und Kameraeinheit gelöst ist, entfallen sowohl der Rechenaufwand als auch die Ungenauigkeiten, die mit einer nachträglichen Zuordnung von Farbbild- und Tiefeninformationen wären. Es stehen von Anfang an aufeinander registrierte Informationen zur Verfügung, so dass sich aus der Nutzung dieser Informationen entlang der gesamten Bilanzanalyseketten Synergien für die Inspektion von Oberflächen und für die Validierung von Oberflächeninspektionsresultaten ergeben, in denen diese zusätzlichen Informationen ausgenutzt werden.

Die Erfindung bezieht sich ferner auf eine Vorrichtung zur Inspektion von Oberflächen eines untersuchten Objekts gemäß Anspruch 10. Diese Vorrichtung ist erfindungsgemäß mit einer Beleuchtungseinrichtung zur Beleuchtung der Oberfläche, einer Projektionseinrichtung zur Projektion eines Musters auf die Oberfläche, einem Flächen-Bildsensor zur Aufnahme eines Bildes der beleuchteten Oberfläche und des projizierten Musters, einer Bildanalyseeinrichtung zur Detektion von Oberflächenbereichen als Fehleranomalien und einer Transproteinrichtung zur Verschiebung der Oberfläche relativ zu dem Flächen-Bildsensor ausgestattet, wobei die Beleuchtungseinrichtung, die Projektionseinrichtung, der Flächen-Bildsensor, die Bildanalyseeinrichtung und/oder die Transporteinrichtung zur Durchführung des vorbeschriebenen Verfahrens oder Teilen hiervon eingerichtet sind. Dazu können die einzelnen Einrichtungen Mikroprozessoren aufweisen und/oder mit einem gemeinsamen Mikroprozessor in Verbindung stehen, der programmtechnisch zur Durchführung des Verfahrens oder Teilen hiervon eingerichtet ist.

Im Kern besteht die Erfindung also aus der Kombination geeigneter Sensorkomponenten für eine simultane, flächengedeckte Erfassung von Geometrie- und Reflexionseigenschaften ausgedehnter Oberflächen in einem Sensor und einem Verfahren zur Fusion und simultanen Analyse der Geometrie- und Reflexionsdaten zur Steigerung der Fehlererkennungs- und Fehlerlokalisierungsleistung von automationsgestützten und vollautomatischen Oberflächeninspektionssystemen.

Weitere Merkmale, Vorteile und Anwendungsmöglichkeiten der vorliegenden Erfindung ergeben sich auch aus der nachfolgenden Beschreibung von Ausführungsbeispielen und der Zeichnung. Dabei bilden alle beschriebenen und/oder bildlich dargestellten Merkmale für sich oder in beliebiger Kombination den Gegenstand der vorliegenden Erfindung, auch unabhängig von ihrer Zusammenfassung in den Ansprüchen oder deren Rückbezügen.

Es zeigen:
- Fig. 1: dreidimensional eine schematische Ansicht eine bevorzugte Ausführungsform einer erfindungsgemäßen Vorrichtung zur Durchführung des vorgeschlagenen Verfahrens;
- Fig. 2: ein aufgenommenes Bild der Oberfläche gemäß einer ersten Ausführungsform und
- Fig. 3: ein aufgenommenes Bild der Oberfläche gemäß einer zweiten, besonderes bevorzugten Ausführungsform des erfindungsgemäß vorgeschlagenen Verfahrens.

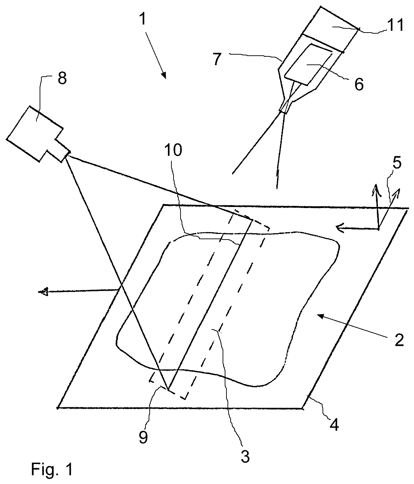

Fig. 1 zeigt eine erfindungsgemäße Vorrichtung 1 zur Inspektion von Oberflächen 3, d.h. mindestens einer Oberfläche 3, eines zu untersuchenden bzw. untersuchten Objekts 2. Das Objekt 2 ist auf einer Transporteinrichtung 4 angeordnet, welche auf ein ortsfestes Koordinatensystem 5 dreidimensional kalibriert ist und durch welche das Objekt 2 mit der Oberfläche 3 an dem Flächen-Bildsensor 6 einer Kamera 7 vorbeibewegt wird bzw. werden kann. Dabei macht die Kamera 7 Aufnahmen der Oberfläche 3 des Objektes 2, und zwar gerade in dem Bereich, in welchem die Oberfläche 3 durch eine kombinierte Beleuchtungs- und Projektionseinrichtung 8 beleuchtet wird, wie durch den gestrichelt dargestellten Beleuchtungsbereich 9 in Fig. 1 angedeutet. In diesem Beleuchtungsbereich 9 werden die Reflexionseigenschaften der Oberfläche 3 nach Aufnahme der Oberfläche 3 mit der Kamera 7 bzw. dem Flächen-Bildsensor 6 der Kamera ausgewertet.

In dem dargestellten Beispiel ist in dem Beleuchtungsbereich 9 eine Linie 10 erkennbar, die als Muster durch die kombinierte Projektions- und Beleuchtungseinrichtung 8 in diesen Bereich projiziert wird. Mittels der Flächenkamera 7 mit dem Flächen-Bildsensor 6 wird also auch das auf die abzutastende Oberfläche 3 projizierte Streifenmuster in Form der Linie 10 aufgenommen, während das Objekt 3 unter der aus der Kamera 7 und der Projektions- und Beleuchtungseinrichtung 8 gebildeten Abtasteinheit weg bewegt wird. Die Bildaufnahme erfolgt dabei so schnell, das in zwei aufeinanderfolgenden Bildern ein Objektvorschub um genau eine Bildzeilenhöhe des Flächen-Bildsensors 6 folgt. Die Bildzeilenhöhe kann gerade der Höhe eines oder mehrerer benachbarter Pixel des Flächen-Bildsensors 6 entsprechen.

Da die Kamera 7 und die Projektions- und Beleuchtungseinrichtung 8 dreidimensional auf das ausgezeichnete Koordinatensystem 5 kalibriert sind, kann im resultierenden Bild mithilfe von Triangulationsalgorithmen ein Höhenprofil bestimmt und im gleichen Bild in einem speziellen Bildbereich, welcher dem Beleuchtungsbereich 9 entspricht, eine zweidimensionale Bildaufnahme erzeugt werden, in welcher eine Detektion von Oberflächenanomalien als Fehlerbereiche erfolgt.

In dem dargestellten Beispiel sind das projizierte Muster 10 und der Beleuchtungsbereich 9 in einem Bereich vorgesehen. Je nach Ausbildung der Projektions- und Beleuchtungseinrichtung 8 und dem ausgewählten Projektionsmuster können diese Bereiche auch getrennt und/oder durch eine Laserlinienprojektion erzeugt werden.

Die von dem Flächen-Bildsensor 6 gelieferten Daten werden in einer an die Kamera angeschlossenen Bildanalyseeinrichtung 11 ausgewertet, in der das durch den Flächen-Bildsensor 6 erzeugte Bild als N-kanalige Bildinformation für einen ausgewählten Bildbereich, bspw. ein Pixel oder mehrere zusammengefasste Pixel, zur Verfügung steht. Somit stehen für jeden Bildbereich sowohl die Tiefeninformationen als auch die jeweiligen Reflexionseigenschaften, zu denen in der Notation der Erfindung auch Infraroteigenschaften zählen, als mehrkanalige Bildinformationen zur Verfügung.

Diese von dem Flächen-Bildsensor 7 gelieferten Rohdaten, d.h. die Reflexionsinformationen und die Tiefeninformation, werden in einem ersten als Vorverarbeitung bezeichneten Verarbeitungsschritt mit dem Ziel des zuverlässigen Auffindens und Klassifizierens von Oberflächenanomalien charakterisiert und aufbereitet. Hierzu gehört insbesondere eine Schätzung von Parametern zur Signalqualität, die Anwendung von Verfahren zur Bildrestoration und Bildverbesserung, wie z.B. das Unterdrücken des Messrauschens oder eine Kontrasthervorhebung und eine Rektifizierung der i.a. perspektivisch aufgenommenen Bilder.

Während den bekannten Oberflächeninspektionssystemen hierfür nur Informationen des Farbbildes selbst zur Verfügung stehen, nutzt die Erfindung Konnotationen zwischen den Farbkanälen und den Tiefenkanälen zur Datenaufbereitung. So werden bspw. aus dem Tiefenbild abgeleitete Informationen über die lokale Oberflächenneigung zur Helligkeitskorrektur der Farbkanäle genutzt, um neigungsbedingte Intensitätsvariationen auszugleichen. Die aus der Tiefenkarte abgeleiteten Maßstabsvariationen des Farbbildes werden zur Rektifizierung des Farbbildes genutzt und aus der Tiefenkarte abgeleitete Oberflächenkrümmungsmaße werden für den Aufbau von Glättungsfiltern für die Rekonstruktion des Farbbildes genutzt. Das Farbbild selbst wiederum wird genutzt, um für eine Glättung der Tiefenkarte Hypothesen über die Lage und Orientierung von Oberflächenanomalien zu erstellen.

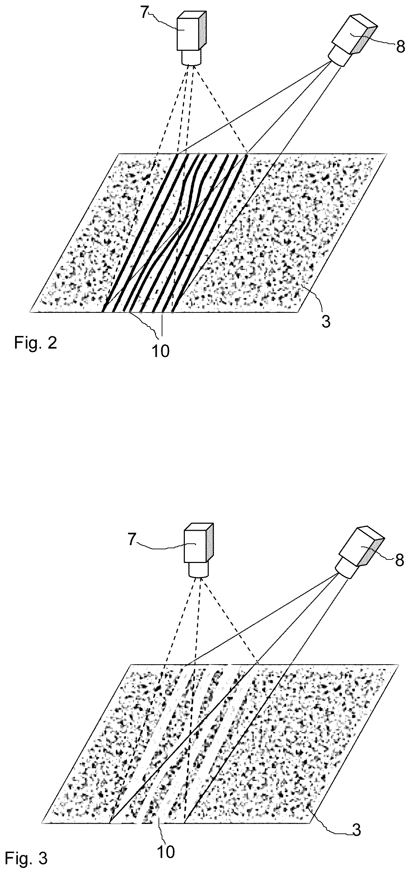

Fig. 2 zeigt ein durch den Flächen-Bildsensor 6 der Kamera 7 aufgenommenes Bild des Beleuchtungsbereichs 9 der Oberfläche 3, d.h. der beleuchteten Oberfläche 3 einschließlich der Projektion des Musters 10, das aus mehreren parallelen Linien besteht. Bei einer planen Oberfläche 3 wären die Linien des Musters 10 auch in dem Bild parallel. Die Verzerrungen der Linien des Musters 10 deuten auf eine Tiefenstruktur der Oberfläche 3 hin, die erfindungsgemäß mit ausgewertet werden. In Fig. 2 sind die Linien des Musters 10 als dunkle, schmale Bereiche in dem ansonsten beleuchteten Bereich 9 der Oberfläche 3 ausgebildet, welche die Tiefeninformation sehr deutlich machen. Im Bereich der dunklen Streifen, die in dem Bild am dunklen Rand des Kontrastbereich des Bildes liegen und in denen kaum noch Struktur erkennbar ist, können jedoch kaum noch reflektiv erfassbare Oberflächenfehler erkannt werden.

Daher sieht eine besonders bevorzugte, in Fig. 3 dargestellte Ausführungsform vor, das projizierte Muster 10 und die beleuchtete Oberfläche 3 in dem aufgenommenen Bild unterschiedliche Helligkeiten aufweisen, wobei das projizierte Muster 10 und/oder die beleuchtete Oberfläche 3 nicht am Rand des durch den Flächen-Bildsensor 6 auflösbaren Kontrastes liegen. Hier sind die Linien des Musters 10 als noch hellere Streifen auf der beleuchteten Oberfläche erkennbar. Außerdem sind die Linien als breite Streifen selbst flächig ausgebildet in dem Sinne, dass sie durch den Flächen-Bildsensor 6 in mehreren Pixeln dargestellt werden. In dieser Anordnung lassen sich auch reflektiv erkennbare Fehler im Bereich des Musters 10 in demselben Bild des Flächen-Bildsensors 6 erkennen, das auch für das Ermitteln der Tiefeninformation herangezogen wird. Die Auswertung der Tiefeninformation erfolgt vorzugsweise entlang des Kontrastübergangs von der beleuchteten Oberfläche 3 zu den Linien des Musters 10.

Erfindungsgemäß können natürlich auch in dieser Anordnung die Streifen des Musters 10 dunkler sein als die beleuchtete Oberfläche 3.

In einem zweiten als Detektion bezeichneten Auswertungsschritt nutzt das erfindungsgemäß vorgeschlagene System die Tiefeninformation gemeinsam mit der Reflexionsinformation zum Auffinden von Oberflächenanomalien. Hier kommt ein neuer Detektionsalgorithmus zum Einsatz, der aus den gegebenen Farb- und Tiefeninformationen einen in lokalen Fenstern einheitlichen Satz von Oberflächenmerkmalen für diese Umgebung ableitet, wie z.B. Defekttiefe, Defektvolumen, Krümmungswerte. Aufgrund dieser Merkmale wird mittels eines binären Entscheidungsverfahrens entschieden, ob das lokal benachbarte Signalmuster als Fehler zu betrachten ist oder nicht. Das Entscheidungsverfahren passt sich dabei adaptiv an die Signalcharakteristik an, indem es die angewendeten Entscheidungsregeln bspw. an Maße zur Charakterisierung der Signalqualität knüpft. Zum Auffinden von Oberflächenanomalien mit einer ausgezeichneten Form, bspw. von punkt- oder linienhaften Anomalien, kommen außerdem Detektionsalgorithmen zum Einsatz, die im Tiefenbild nach lokalen Punkt- oder Linienstrukturen suchen. Hierzu werden aus dem Tiefenbild abgeleitete Oberflächenkrümmungsmaße herangezogen.

In einem weiteren, als Segmentierung bezeichneten Auswertungsschritt werden erfindungsgemäß die Tiefeninformationen gemeinsam mit den Reflexionsinformationen zur Segmentierung von Oberflächenanomalien genutzt. Es kommt ein neues Segmentierungsverfahren für dreidimensionale registrierte Farbbilder zum Einsatz, das sich wie das Detektionsverfahrens adaptiv an die Signalcharakteristik anpasst, indem es die angewendeten Entscheidungsregeln bspw. an Maßen zur Charakterisierung der Signalqualität knüpft.

Bei einem weiteren, als Merkmalsextraktion bezeichneten Auswertungsschritt ergänzt das erfindungsgemäß vorgeschlagene Verfahren den aus der Analyse von Farbbildern (Intensitätsbildern) genutzten Merkmalsraum um weitere, aus dem Tiefenbild abgeleitete Merkmale der Oberfläche. Hierzu leitet sie für das kombinierte Farb- und Tiefenbild zunächst sämtliche Merkmale noch einmal ab, die bereits aus der Farbbildanalyse (Intensitätsbildern) bekannt sind, wodurch sich die Gesamtzahl verdoppelt. Darüber hinaus werden aus dem Tiefenbild weitere Merkmale bestimmt, die sich auf spezielle Eigenschaften des Tiefenbildes stützen, bspw. das Fehlervolumen oder das Verhältnis zwischen Fehleroberfläche und Fehlerhöhe. Ferner werden Merkmale erzeugt, welche die Informationen des Farbbildes (Intensitätsbildes) mit den Informationen des Tiefenbildes gezielt verknüpfen, bspw. die Variante des mit der Bildhelligkeit gewichteten Höhenhubs eines Fehlers.

Zur Klassifikation von Oberflächenfehlern wird der vorstehend erläuterte, erweiterte Merkmalsvektor herangezogen, in dem sich 300 und mehr Eigenschaften eines Fehlers finden können. Aufgrund der Vielzahl dieser Merkmale kommen dabei gezielt Klassifikationsverfahren zum Einsatz, die eine Merkmalsdetektion und/oder eine Orthogonalisierung des Merkmalraums vornehmen.

Bei der Fehlerlokalisation nutzt die Erfindung die Tiefeninformation gemeinsam mit der Information zur Verbesserung der Genauigkeit, mit der die Position von Oberflächenanomalien in Bezug auf die Ränder des inspizierten Objekts ermittelt werden. Eine Verbesserung ergibt sich dabei zunächst durch Integration der Tiefeninformation in die Verfahren zur Detektion und Lokalisierung des Materialrandes. Während bei der herkömmlichen Oberflächeninspektion diesbezüglich allein auf die Farbinformation zurückgegriffen wird und sich die Randerkennung als ein Modell der Erscheinungsform der Materialkante im Bild stützt, kann aus dem Tiefenbild die Materialkante wesentlich direkter und unter Anwendung wesentlich schwächerer Annahmen direkt und mit größerer Sicherheit abgeleitet werden. Auch die Beschaffung des Hintergrundes hat kaum Einfluss auf die Bestimmung der Position einer Materialkante.

Bestimmte Oberflächenfehler zeichnen sich dadurch aus, dass sie aus einer Gruppe von Einzelereignissen bestehen. Für solche Fehler sind die Einzelereignisse mit geeigneten Methoden zu einem Masterdefekt zu agglomerieren. Dies erfolgt in dem Auswerteschritt der Fehleragglomeration. Die Erfindung benutzt dabei die Tiefeninformation, um benachbarte Anomalien mit gleichem Tiefenprofil und gleicher Fehlerklasse zu einem Masterdefekt zusammenzufassen.

Neben der durch die zuvor beschriebenen Merkmale erreichten Verbesserung der Inspektionsleistung erschließen das erfindungsgemäß vorgeschlagene Verfahren und die erfindungsgemäß vorgeschlagene Vorrichtung Anwendungsfelder der automatischen Oberflächeninspektion, die herkömmlichen Oberflächeninspektionssystemen bislang vorenthalten sind. Diese neuen Anwendungen sind erfindungsgemäß bspw. Planheits- und Dickenmessung, Messung der dreidimensionalen Materialstruktur, Rauhigkeits- und Porositätsmessung, dreidimensionale Inspektion gemusterter Oberflächen (z.B. Bleche) einschließlich Vermessung der Prägetiefe, automatisches Lesen von Prägemerkmalen, Vermessung der Prägetiefe, dreidimensionale Schweißnahtinspektion, simultane Oberflächen- und Forminspektionen (bspw. Schieneninspektionen) und/oder Erkennung von periodisch auftretenden Materialdickeschwankungen.

Mit der hinzugewonnenen Tiefeninformation ergeben sich letztlich auch im Herstellungsprozess des Objekts neue Möglichkeiten zur Prozesskontrolle und Prozesssteuerung, wie bspw. selektive Materialbearbeitung nach Breite und Tiefe, selektive Walzendrucksteuerung je nach Oberflächenprofil und/oder selektiver Lack- und/oder Füllerauftrag je nach Oberflächenrauigkeit.

Darüber hinaus bietet die Erfindung die Möglichkeit, Oberflächenfehler dem menschlichen Betrachter in einer dreidimensionalen Darstellung anschaulich darzustellen. Defekte, die sich dem Inspektionspersonal ansonsten nur durch deren Tastsinn über eine so genannte Fingerprobe erschließen, lassen sich somit auch in einer dreidimensionalen Darstellung anschaulich visualisieren. Hierdurch wird die Auswertung des Inspektionsergebnisses vereinfacht.

### Bezugszeichen:

- 1: Vorrichtung zur Inspektion von Oberflächen eines zu untersuchenden Objekts
- 2: zu untersuchendes Objekt
- 3: Oberfläche
- 4: Transporteinrichtung
- 5: Koordinatensystem
- 6: Flächen-Bildsensor
- 7: Kamera
- 8: Beleuchtungs- und Projektionseinrichtung
- 9: Beleuchtungsbereich
- 10: Muster, Linie
- 11: Bildanalyseeinrichtung

## Patentansprüche

1. Verfahren zur Inspektion von Oberflächen (3) eines untersuchten Objekts (2), bei welchem die Oberfläche (3) mittels mindestens einer Beleuchtungseinrichtung (8) beleuchtet und mit mindestens einem Flächen-Bildsensor (6) aufgenommen wird, wobei die aufgenommenen Bilder einer Bildanalyseeinrichtung (11) zugeführt werden, welche dazu eingerichtet ist, Oberflächenanomalien als Fehlerbereiche in einer Detektion zu ermitteln sowie ggf. die Fehlerbereiche in einer Segmentierung zueinander oder gegen den Bildhintergrund abzugrenzen, zusammengehörige Fehlerbereiche in einer Regionenanalyse zusammen zu fassen und/oder aus Fehlerbereichen bzw. Fehlerregionen in einer Merkmalsextraktion charakteristische Fehlermerkmale abzuleiten, wobei der Flächen-Bildsensor (6) dreidimensional auf ein ausgewähltes Koordinatensystem (5) kalibriert ist und das untersuchte Objekt (2) mit der Oberfläche (3) relativ zu dem Flächen-Bildsensor (6) bewegt wird, **dadurch gekennzeichnet, dass** mittels einer dreidimensional auf das ausgewählte Koordinatensystem (5) kalibrierten Projektionseinrichtung (8) ein Muster (10) auf einen Bereich der Oberfläche (3) des Objekts (2) projiziert wird, welcher durch den Flächen-Bildsensor (6) aufgenommen wird, und jeweils die Position definierter Musterabschnitte des projizierten Musters (10) auf der Oberfläche (3) des Objekts (2) in dem ausgewählten Koordinatensystem bestimmt wird, wobei die Struktur der Oberfläche in einer durch die Auflösung des Bildflächen-Sensors begrenzten Auflösung als Tiefeninformation erfasst und gleichzeitig mit den erfassten Farb- bzw. Intensitätsinformationen in jedem Bildpunkt für die Detektion und Klassifizierung von Fehlerbereichen herangezogen werden, dass die Aufnahme des projizierten Musters (10) und die Aufnahme der beleuchteten Oberfläche (3) in demselben Bild des Flächen-Bildsensors (6) erfolgt und dass das projizierte Muster (10) und die beleuchtete Oberfläche (3) in dem aufgenommenen Bild unterschiedliche Helligkeiten aufweisen, wobei das projizierte Muster (10) und/oder die beleuchtete Oberfläche (3) nicht am Rand des durch den Flächen-Bildsensor (6) auflösbaren Kontrastes liegen.

2. Verfahren nach Anspruch 1, **dadurch gekennzeichnet, dass** aus den Positionen der Musterabschnitte ein Tiefenprofil der Oberfläche (3) ermittelt wird.

3. Verfahren nach Anspruch 1 oder 2, **dadurch gekennzeichnet, dass** als Muster (10) ein Linienmuster oder ein Streifenmuster projiziert wird.

4. Verfahren nach einem der vorhergehenden Ansprüche, **dadurch gekennzeichnet, dass** das Muster (10) als heller Bereich mit dunklen Zwischenräumen projiziert wird.

5. Verfahren nach einem der Ansprüche 1 bis 3, **dadurch gekennzeichnet, dass** das Muster (10) als dunkler Bereich mit hellen Zwischenräumen projiziert wird.

6. Verfahren nach einem der Ansprüche 1 bis 3, **dadurch gekennzeichnet, dass** das Muster (10) durch eine Laser-Linienprojektion erzeugt wird.

7. Verfahren nach einem der vorhergehenden Ansprüche, **dadurch gekennzeichnet, dass** die Bildaufnahme und die Bewegung des Objekts (2) derart aufeinander abgestimmt sind, dass zwischen zwei aufeinander folgenden Aufnahmen ein Objektvorschub um genau eine Bildzeile des Flächen-Bildsensors (6) erfolgt.

8. Verfahren nach einem der vorhergehenden Ansprüche, **dadurch gekennzeichnet, dass** einem ausgewählten Oberflächenbereich eine mehrkanalige Bildinformation zugeordnet ist, von denen ein Kanal die ortsabhängige Tiefeninformation und ein weiterer Kanal oder mehrere weitere Kanäle die ortsabhängigen Farbinformationen enthalten.

9. Verfahren nach Anspruch 8, **dadurch gekennzeichnet, dass** die mehrkanalige Bildinformation bereits im Flächen-Bildsensor (6) zugeordnet wird.

10. Vorrichtung zur Inspektion von Oberflächen (3) eines untersuchten Objekts (2) mit einer Beleuchtungseinrichtung (8) zur Beleuchtung der Oberfläche (3), einer Projektionseinrichtung (8) zur Projektion eines Musters (10) auf die Oberfläche (3), einem Flächen-Bildsensor (6) zur Aufnahme eines Bildes der beleuchteten Oberfläche (3) und des projizierten Musters (10), einer Bildanalyseeinrichtung (11) zur Detektion von Oberflächenbereichen als Fehleranomalien und einer Transporteinrichtung (4) zur Verschiebung der Oberfläche (3) relativ zu dem Flächen-Bildsensor (6), **dadurch gekennzeichnet, dass** die Beleuchtungseinrichtung (8), die Projektionseinrichtung (8), der Flächen-Bildsensor (6), die Bildanalyseeinrichtung (11) und die Transporteinrichtung (4) zur Durchführung des Verfahrens nach einem der Ansprüche 1 bis 9 eingerichtet sind.

## Claims

1. A method for the inspection of surfaces (3) of an examined object (2) in which the surface (3) is illuminated by means of at least one lighting apparatus (8) and recorded using at least one area image sensor (6), wherein the recorded images are supplied to an image analysis device (11) which is set up to determine surface anomalies as error areas during detection and also, where necessary, to delineate the error areas in a segmentation in respect of one another or against the image background, to compile error areas which belong together in a region analysis and/or to derive characteristic error features from error areas or error regions during feature extraction, wherein the area image sensor (6) is calibrated three-dimensionally for a selected coordinate system (5) and the examined object (2) with the surface (3) is moved relative to the area image sensor (6), **characterized in that** by means of a projection apparatus (8) calibrated three-dimensionally for the selected coordinate system (5), a pattern (10) is projected onto an area of the surface (3) of the object (2) which is recorded by the area image sensor (6) and, in each case, the position of defined pattern portions of the projected pattern (10) is determined on the surface (3) of the object (2) in the selected coordinate system, wherein the structure of the surface is detected as depth information in a resolution limited by the resolution of the image area sensor and, at the same time, used with the detected colour or intensity information at each image point for the detection and classification of error areas, so that the recording of the projected pattern (10) and the recording of the illuminated surface (3) takes place in the same image of the area image sensor (6) and the projected pattern (10) and the illuminated surface (3) have different brightnesses in the recorded image, wherein the projected pattern (10) and/or the illuminated surface (3) do not lie at the periphery of the contrast that can be recorded in terms of resolution by the area image sensor (6).

2. The method according to claim 1, **characterized in that** a depth profile of the surface (3) is determined from the positions of the pattern portions.

3. The method according to claim 1 or 2, **characterized in that** a line pattern or a stripe pattern is projected as the pattern (10).

4. The method according to one of the preceding claims, **characterized in that** the pattern (10) is projected as a bright area with dark intervals.

5. The method according to one of claims 1 to 3, **characterized in that** the pattern (10) is projected as a dark area with bright intervals.

6. The method according to one of claims 1 to 3, **characterized in that** the pattern (10) is produced by a laser line projection.

7. The method according to one of the preceding claims, characterized n that the image recording and the movement of the object (2) are coordinated with one another in such a manner that between two consecutive recordings the object is advanced by exactly one image line of the area image sensor (6).

8. The method according to one of the preceding claims, **characterized in that** multi-channel image information is assigned to a chosen surface area, one channel of which contains the location-dependent depth information and another channel, or a plurality of other channels, contain(s) the location-dependent colour information.

9. The method according to claim 8, **characterized in that** the multi-channel image information is already assigned in the area image sensor (6).

10. An apparatus for the inspection of surfaces (3) of an examined object (2) with a lighting apparatus (8) for illuminating the surface (3), a projection apparatus (8) for projecting a pattern (10) onto the surface (3), an area image sensor (6) for recording an image of the illuminated surface (3) and the projected pattern (10), an image analysis device (11) for detecting surface areas as error anomalies and a transport device (4) for displacing the surface (3) relative to the area image sensor (6), **characterized in that** the image lighting apparatus (8), the projection apparatus (8), the area image sensor (6), the image analysis device (11) and the transport device (4) are set up for implementing the method according to one of claims 1 to 9.

## Revendications

1. Méthode pour l'inspection de surface (3) d'un objet analysé (2), pour laquelle la surface (3) est éclairée au moyen d'au moins un système d'éclairage (8) et est enregistrée avec au moins un capteur d'images de surface (6), les images enregistrées étant acheminées à un système d'analyse d'images (11), lequel est agencé pour déterminer dans une détection des anomalies de surface en tant que zones de défaut ainsi que le cas échéant de délimiter les zones de défaut dans une segmentation les unes par rapport aux autres ou par rapport à un arrière-plan d'image, de saisir les zones de défaut correspondantes en même temps dans une analyse de région et/ou de dériver des signes distinctifs de défaut caractéristiques dans une extraction caractéristique à partir de zones de défaut ou régions d'erreur, le capteur d'images de surface (6) étant étalonné de façon tridimensionnelle sur un système de coordonnées sélectionné (5) et l'objet analysé (2) étant déplacé avec la surface (3) par rapport au capteur d'images de surface (6), **caractérisée en ce qu'**au moyen d'un système de projection (8) étalonné de façon tridimensionnelle sur le système de coordonnées sélectionné (5), un modèle (10) est projeté sur une zone de la surface (3) de l'objet (2), lequel est enregistré par le capteur d'images de surface (6) et la position des sections de modèles définies du modèle projeté (10) est respectivement déterminée sur la surface (3) de l'objet (2) dans le système de coordonnées sélectionné, la structure de la surface étant saisie en tant qu'information de profondeur dans une résolution limitée par la résolution du capteur de surfaces d'images et étant introduite simultanément avec les informations chromatiques ou d'intensité dans chaque point d'image pour la détection et la classification des zones de défaut, **en ce que** l'enregistrement du modèle projeté (10) et l'enregistrement de la surface éclairée (3) a lieu dans la même image du capteur d'images de surface (6) et **en ce que** le modèle projeté (10) et la surface éclairée (3) présentent des luminosités différentes dans l'image enregistrée, le modèle projeté (10) et/ou la surface éclairée (3) ne se situant pas au bord du contraste résoluble par le capteur d'images de surfaces (6).

2. Méthode selon la revendication 1, **caractérisée en ce qu'**un profil de profondeur de la surface (3) est déterminé à partir des positions des sections de modèle.

3. Méthode selon la revendication 1 ou 2, **caractérisée en ce qu'**un modèle à lignes ou un modèle à bandes est projeté en tant que modèle (10).

4. Méthode selon l'une quelconque des revendications précédentes, **caractérisée en ce que** le modèle (10) est projeté en tant que zone claire avec des espaces intermédiaires sombres.

5. Méthode selon l'une quelconque des revendications 1 à 3, **caractérisée en ce que** le modèle (10) est projeté en tant que zone sombre avec des espaces intermédiaires clairs.

6. Méthode selon l'une quelconque des revendications 1 à 3, **caractérisée en ce que** le modèle (10) est produit par une projection de lignes au laser.

7. Méthode selon l'une quelconque des revendications précédentes, **caractérisée en ce que** la prise de vue et le mouvement de l'objet (2) sont harmonisés l'un par rapport à l'autre de telle sorte qu'entre deux prises successives a lieu une avance d'objet d'exactement une ligne d'image du capteur d'images de surface (6).

8. Méthode selon l'une quelconque des revendications précédentes, **caractérisée en ce qu'**une information d'image multicanale est attribuée à une zone de surface sélectionnée, dont un canal contient l'information de profondeur en fonction du lieu et un autre canal ou plusieurs autres canaux contiennent des informations de couleur en fonction du lieu.

9. Méthode selon la revendication 8, **caractérisée en ce que** l'information d'image multicanale est déjà attribuée dans le capteur d'images de surface (6).

10. Dispositif pour l'inspection de surfaces (3) d'un objet analysé (2) avec un système d'éclairage (8) pour éclairer la surface (3), un système de projection (8) pour la projection d'un modèle (10) sur la surface (3), un capteur d'images de surface (6) pour enregistrer une image de la surface éclairée (3) et du modèle projeté (10), un système d'analyse d'images (11) pour la détection des zones de surface en tant qu'anomalies de défaut et un système de transport (4) pour le déplacement de la surface (3) par rapport au capteur d'images de surface (6), **caractérisé en ce que** le système d'éclairage (8), le système de projection (8), le capteur d'images de surface (6), le système d'analyse d'image (11) et le système de transport (4) sont agencés pour exécuter la méthode selon l'une quelconque des revendications 1 à 9.
